# EUROPEAN PATENT APPLICATION

(11) **EP 3 744 495 A1**
(43) Date of publication of application: **02.12.2020**
(21) Application number: 19177473.6
(22) Date of filing: 29.05.2019
(51) Int. Cl.: B29C 39/00, A63H 23/08, A63H 33/42, B29C 33/00, B29C 39/02, B29C 39/12

(54) **METHOD FOR CASTING A GEL OBJECT, AND A PLAY DEVICE AND METHOD FOR PRODUCING THE PLAY DEVICE USING A GEL OBJECT**

(71) Applicant: Top Twence B.V., 7651 DH Tubbergen (NL)
(72) Inventor: Sjoers, Martinus Cornelis, 7651 DH Tubbergen (NL)
(74) Representative: van Essen, Peter Augustinus

(57) **Abstract**

The invention provides a method for casting a gel object, comprising providing:
- at least two gel-forming compositions, and
- a casting mould, said casting mould comprising a casting mould outer wall having a casting mould outer wall height and enclosing a casting mould volume, said casting mould volume divided into a first casting mould sub volume that is separated from at least one second casting mould sub volume through a separating wall having a separating wall height that is lower than said casting mould outer wall height, said method further comprising:
- filling said at least one second casting mould sub volume with a first of said at least two gel-forming compositions;
- filling said first casting mould sub volume with a second of said at least two gel-forming compositions, and
- allowing said gelling compositions to form into a gel providing a gel object comprising a main body of said second of said at least two gel-forming compositions and at least one connected sub body of said first of said at least two gel-forming compositions.

## Description

### Field of the invention

The invention relates to a method for casting a gel object, a casting gel composition, kit of parts thereof, and a casting mould for casting a gel object. The invention further pertains to a play device and method for producing the play device using a gel object.

### Background of the invention

For times, many materials like plaster, plastic and other materials have been casted into moulds. Often, these castings and casting methods were provided in a hobby and children's play setting.

Alternative materials and casting mould applications have been developed.

### Summary of the invention

Hence, it is an aspect of the invention to provide an alternative casting method, kit-of-parts and casting mould. In particular, there is provided a children's paly assembly of kit-of-parts, which preferably further at least partly obviates one or more of above-described drawbacks.

There is currently provided a method for casting a gel object, comprising providing:
- at least two gel-forming compositions, and
- a casting mould, said casting mould comprising a casting mould outer wall having a casting mould outer wall height and enclosing a casting mould volume, said casting mould volume divided into a first casting mould sub volume that is separated from at least one second casting mould sub volume through a separating wall having a separating wall height that is lower than said casting mould outer wall height, said method further comprising:
- filling said at least one second casting mould sub volume with a first of said at least two gel-forming compositions;
- filling said first casting mould sub volume with a second of said at least two gel-forming compositions, and
- allowing said gelling compositions to form into a gel providing a gel object comprising a main body of said second of said at least two gel-forming compositions and at least one connected sub body of said first of said at least two gel-forming compositions.

There is further provided a casting mould comprising a casting mould outer wall having a casting mould outer wall height and enclosing a casting mould volume, said casting mould volume divided into a first casting mould sub volume that is separated from at least one second casting mould sub volume through a separating wall having a separating wall height that is lower than said casting mould outer wall height.

There is further provided a kit-of-parts comprising:
- at least one casting mould described above;
- at least two first aqueous compositions comprising a water-soluble alginate, in particular sodium alginate, in an amount of between 1 and 4 % by wt. and at least one of said at least two first aqueous compositions comprising a colouring agent, said at least two first aqueous compositions provided in a respective first and second container;
- a second aqueous composition comprising a gelling compound, in particular calcium chloride, said second aqueous composition comprising an amount of between 5 and 10 % by wt calcium chloride and is provided in a further container.

The invention further relates to a play device comprising at least one gel object produced by casting a casting composition comprising two gel-forming compositions in a casting mould, said device further comprising:
- a transparent, in particular colourless transparent, container for holding a translucent liquid, in particular water, and said gel object, said container comprising a filling opening with an attachment provision;
- a closing part for closing off said filling opening, said closing part comprising a complementary attachment provision for liquid-tight attaching to said attachment provision of said transparent container;
- a density of said translucent liquid and said gel object such that said gel object is suspended in said translucent liquid, in particular in neutral buoyancy.

It was found that the method provides a new and attractive playing experience to children, for instance. The design of the casting mould in combination with specific casting gels allows creation of for instance multi-coloured objects. The compositions can be provided in such a way that they gel or form a gel fast, providing a food-grade or almost gel object. This provides a good play and educational experience for children. The special mould allows creative combining of colours, and teaches thinking in process steps.

In an embodiment, a water-soluble alginate is used. In particular, sodium alginate is used as one of the gelling compounds. Other, preferably child-save and for instance food-save alginates can be used, and that are known to a skilled person to have comparable properties. Sodium alginate, however, is relatively cheap, and safe to use.

In general, sodium alginate is a salt from alginic acid, also called algin or alginate. Alginic acid is a linear copolymer with homopolymeric blocks of (1-4)-linked β -D-mannuronate (M) and its C-5 epimer α-L-guluronate (G) residues, respectively, covalently linked together in different sequences or blocks. The monomers can appear in homopolymeric blocks of consecutive G-residues (G-blocks), consecutive M-residues (M-blocks) or alternating M and G-residues (MG-blocks).

Alginates are often refined from brown seaweeds. A wide variety of brown seaweeds of the class Phaeophyceae are harvested throughout the world to be converted into the raw material commonly known as sodium alginate

In an embodiment of the current invention, this is provided in an aqueous composition, in particular in combination with a colorant like a dye, a pigment, or a combination thereof.

Example, non-limiting, of possible colorants are: Pigment blue 15 (CAS no. 147-14-8), Pigment Green 7 (CAS no. 1328-53-6), Pigment Yellow 14 (CAS no. 5468-75-7), Pigment Yellow 23 (CAS no. 1934-21-0), Pigment Violet 23 (CAS no. 6358-30-1), Pigment Red 48 (CAS no. 3564-21-4), Pigment Red 170 (CAS no. 5858-81-1), Pigment Orange 13 (CAS no. 3520-72-7). These colorants are usually added in weight percentages of between 0.2-1.0. In an embodiment, these are used in amounts of between 0.25-0.85 on weight.

The colorant can also be or comprise a pigment, like for instance titanium dioxide (CAS no. 13463-67-7). Titanium dioxide and similar pigments are usually applied in percentage on weight of between 0.1-0.01. In an embodiment, these are used in quantities of between 0.05 and 0.015 on weight. Other, similar pigments can be used, either in natural form of treated in order to be compatible with the further composition in which they are used.

Furthermore, additional additives may be added for compatibility, or as preservatives, like for instance sodium benzoate, methylparaben, or similar substances that are known to a skilled person. These are used in quantities known to a skilled person, and in compliance with legislation of children's toys, and possibly food regulations.

In an embodiment, the gel-forming composition is provided as basically two compounds which, when brought into contact producing a gel, in particular an aqua gel. One of these two compounds is provided in various compositions, each having a different colour, and one can be colourless. These compounds are provided as a kit of parts.

In an embodiment of the method, the at least two gel-forming compositions have different colours, in particular including colourless one colourless gel-forming composition.

In an embodiment of the method, providing said at least two gel-forming compositions comprises providing:
- at least two first aqueous compositions comprising a water-solvable salt of an alginic acid and at least one of a respective first and second colouring agent or colorant;
- a second aqueous composition comprising at least 0.5-10 % by wt. calcium chloride, and
- contacting said at least two first aqueous compositions and said second aqueous composition.

In an embodiment the method further comprises:
- filling said at least one second casting mould sub volume with a first of said first aqueous solution;
- filling said first casting mould sub volume with a second of said first aqueous solution, and
- contacting said first aqueous solutions in said casting mould with said second aqueous solution.

In an embodiment, the casting mould comprises a series of second casting mould sub volumes that are each separated from said first casting mould sub volume via a said separating wall.

In an embodiment, the casting mould sub volumes each comprise a casting mould sub volume floor, wherein in particular said a casting mould sub volume floors is raised a maximum of 20 % of the outer wall height with respect to a neighbouring sub volume floor.

In an embodiment, at least one sub volume comprises an indent or hole, in particular having a depth of between 1-0.25 times the separating wall height.

In an embodiment, the casting mould has a ratio of casting mould diameter to casting mould outer wall height of between 1:1 to 20:1, and a ratio of casting mould outer wall height to separating wall height of between 3:1 to 3:2.

In an embodiment, the casting mould diameter is between 3 and 15 cm, in particular between 5 and 9 cm.

In an embodiment, the at least two first aqueous compositions each comprises at least one colouring agent providing said two first aqueous compositions with a visually different colour.

In an embodiment, the at least two first aqueous compositions are partially gelled, in particular said at least two first aqueous compositions are each provided in a tube and gelled such that they need to be pressed out of their tube by mild pressure, for instance by hand.

In an embodiment, the play device further comprises:
- light-reflecting particles to be introduced into said transparent container for providing a cloud of reflecting particles in water when filling said container and surrounding said gel object when said play device is shaken, in particular said reflecting particles are flakes, more in particular having a density that is higher than said density of said translucent liquid.

The play device further comprises a lighting provision in said closing part for illumination of an interior of said transparent container, in particular said lighting provision are LED elements, more in particular having a mutually differing colours.

In an embodiment the transparent container comprises a spherical shaped part or dome shaped part.

In an embodiment the closing part comprises a surface for resting said play device on for instance a table surface, said surface mirroring said attachment provision.

In an embodiment the lighting provision has at least three lighting elements each having a different colour, in particular a different primary colour, and said lighting device comprises a controller for changing colour or activating a different lighting element after a period of time, and wherein in particular said gel object has at least parts comprising coloring material changing colour depending on temperature, light colour, light intensity.

In an embodiment the color transmitted by said lighting provision is selected with colour of part of gel object for providing a colour effect, for instance letting it become invisible with respect to said transparent liquid.

In an embodiment the filling opening is round, circular.

In an embodiment the attachment provision allow sliding attachment, together provide a bayonet fitting, or comprise a complementary thread.

In an embodiment the sealing ring between said translucent container and said closing part for liquid-tight closing said playing device.

The invention further relates to a method for producing a play device comprising:
- making said casting composition from at least two readily provided components;
- casting said at least one gel object using said casting mould;
- providing said container;
- filling said container with water and said gel object;
- closing said container with said closing part.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. For instance, if an antenna is functionally coupled or functionally connected to a communication device, received electromagnetic signals that are receives by the antenna can be used by the communication device. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
Figure 1 schematically depicts an embodiment of a casting mould;
Figure 2 schematically depicts an example of a cast gel object having various coloured parts, i.e., a main body and sub bodies,
Figures 3-17 aspects of the play device.

The drawings are not necessarily on scale.

### Description of preferred embodiments

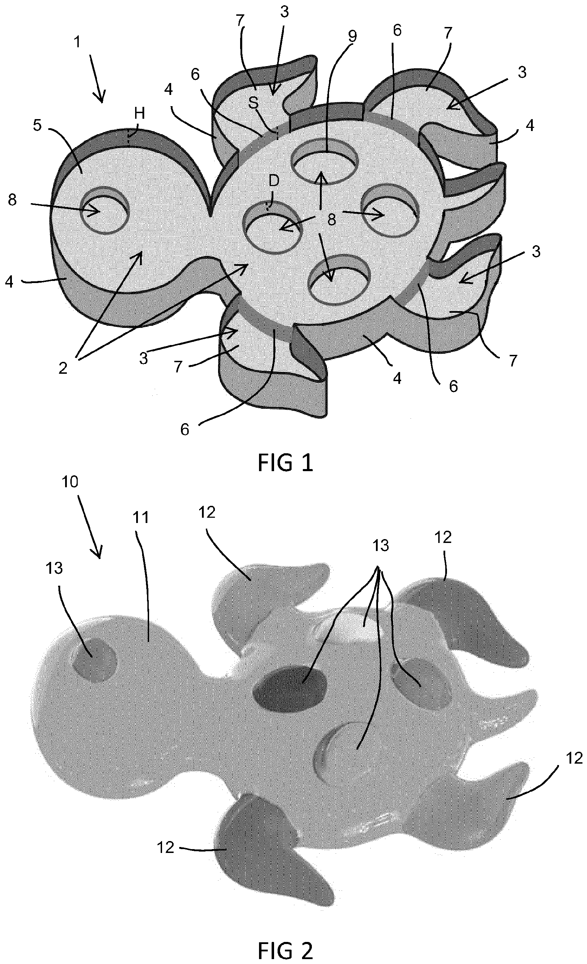

Figure 1 schematically depicts a casting mould 1. The casting mould 1 is surrounded by an outer casting mould wall 4 around the complete casting mould 1, defining a casting mould volume.

The casting mould 1 has a volume defined by the outer wall 4 that is divided into a first (here main) casting mould sub volume 2. The casting mould 1 further comprises in this example various second casting mould sub volumes 3. The first casting mould sub volume 2 has a first casting mould sub volume floor 5. The second casting mould sub volumes 3 each have a second casting mould sub volume floor 7. In most embodiments, the casting mould floor 5 and the casting mould sub volumes floors are substantially at a same level. Differences in level of neighbouring sub volumes floors are less than 10% of an outer wall height H. The casting mould outer wall 4 extends to a casting mould outer wall height H above the first casting mould sub volume floor.

The first sub volume 2 and the second sub volumes 3 are separated from one another by a separating wall having a separating wall height S.

In an example, for play objects like the current drawings, the casting mould 1 can be between 2 and 15 cm at its largest diameter. Often, the mould is about 5-10 cm at its largest diameter. In such embodiments, the casting mould outer wall 4 has a first outer casting mould wall height of between 2 and 10 mm (with respect to its floor). In the embodiment of 5-10 cm, the height will be about 3-6 mm.

The separating wall 6 has a separating wall height S of between about 1-4 mm. Usually it is between 35%-65% of the casting mould outer wall height.

In the illustrated example which has a largest diameter of about 5-10 cm, the first separating wall height S is between 45% and 55 % of the indicated height range of 3-6 mm.

The indicated indents 8 usually have a indent depth D with respect to the respective casting mould sub volume floor that is comparable to the separating wall height. The indent depth D for the illustrated example dimensions will be between 1 and 3 mm.

It is clear that in the casting mould sub volume, it is also possible to provide additional indents 8.

In use, in the method for making a gel object 10 (see figure 2 for the end product), first the indents 8 and casting mould sub volumes 3 are filled with an amount of gel-forming composition in different or identical colours (or even colourless..). Next, the first casting mould volume 2 is filled with a different colour of gel-forming composition. In an embodiment, the casting mould is first filled with different sodium alginate-comprising compositions, and the filled casting mould is subsequently contacted with a gel-inducing composition, for instance a calcium chloride comprising aqueous solution. After several seconds already, the gel object can be removed from the casting mould. The result is a multi-coloured gel object 10. The gel object 10 has a main body 11 formed in the first casting mould sub volume 2. The gel object 10 further has sub bodies 12 that are attached to the main body 11 and that are formed in the second casting mould sub volumes 3. The gel object con further have parches 13 that are formed in the indents 8. Thus, a colourful gel object can for instance be made. Despite the separating walls 6, the gel object is one single object.

### Example of a gel composition and kit-of-parts

**Component 1**

| INCI name | CAS No. | Amount (% by Weight)∗ |
|---|---|---|
| Water | 7732-18-5 | 97.99-95.5 |
| SODIUM ALGINATE | 9005-38-3 | 2.0 |
| SODIUM BENZOATE | 532-32-1 | 0.3 |
| METHYLPARABEN | 99-76-3 | 0.2 |
| PHENOXYETHANOL | 122-99-6 | 0.5 |
| Colorant/pigment/dye | | 0.01-1.5 |

| | | |
|---|---|---|
| (*)The total amount adding up to 100% | | |

The colorant can for instance comprise:
Pigment blue 15 (CAS no. 147-14-8), Pigment Green 7 (CAS no. 1328-53-6), Pigment Yellow 14 (CAS no. 5468-75-7), Pigment Yellow 23 (CAS no. 1934-21-0), Pigment Violet 23 (CAS no. 6358-30-1), Pigment Red 48 (CAS no. 3564-21-4), Pigment Red 170 (CAS no. 5858-81-1), Pigment Orange 13 (CAS no. 3520-72-7). These colorants are usually added in weight percentages of between 0.2-1.0. In an embodiment, these are used in amounts of between 0.25-0.85 om weight.

TITANIUM DIOXIDE (CAS no. 13463-67-7). Titanium dioxide and similar pigments are usually applied in percentage on weight of between 0.1-0.01. In an embodiment, these are used in quantities of between 0.05 and 0.015 on weight.

**Component 2**

| INCI name | CAS No. | % by Weight∗ |
|---|---|---|
| WATER | 7732-18-5 | 94-89.09 |
| CALCIUM CHLORIDE | 10043-52-4 | 6 |
| SODIUM BENZOATE | 532-32-1 | 0-2 |
| METHYLPARABEN | 99-76-3 | 0-2 |
| Erythrosine | 16423-68-0 | 0-0.01 |

| | | |
|---|---|---|
| (*add up to 100%) | | |

Component 2 is in an embodiment provided in a form indicated above. In use. a few drops of component 2 is added to for instance regular tap water. This solution is subsequently provided for gelling the first component.

In an embodiment, component 1 and component 2 are provided in a kit-of-parts. Component 1 is for instance the aqueous composition provided in various colours in tubes. The component 2 is provided in the illustrated, concentrated form in for instance a small bottle. A measuring cup or bowl can be provided with an indication of the amount of component 2 and the required amount of (regular tap) water. The cup or bowl is dimensioned to properly holed a filled casting mould.

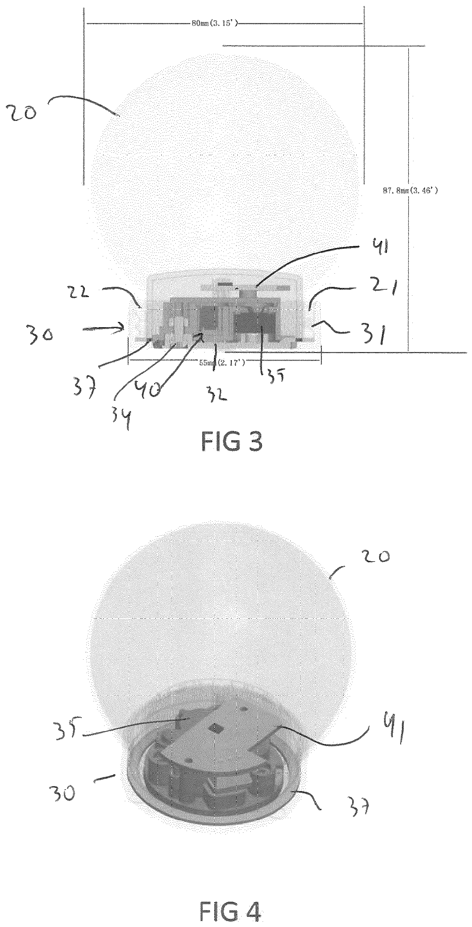

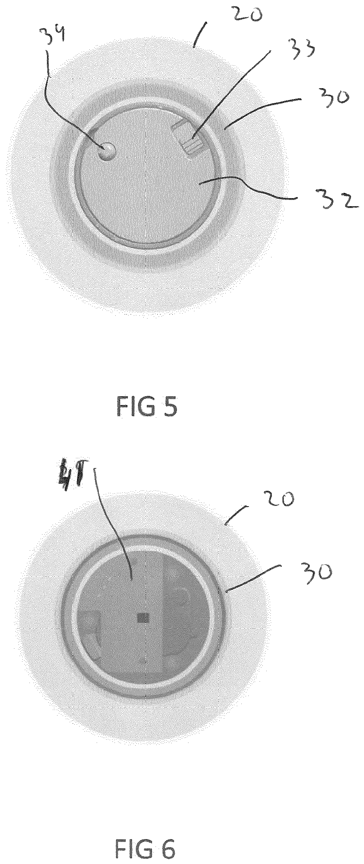

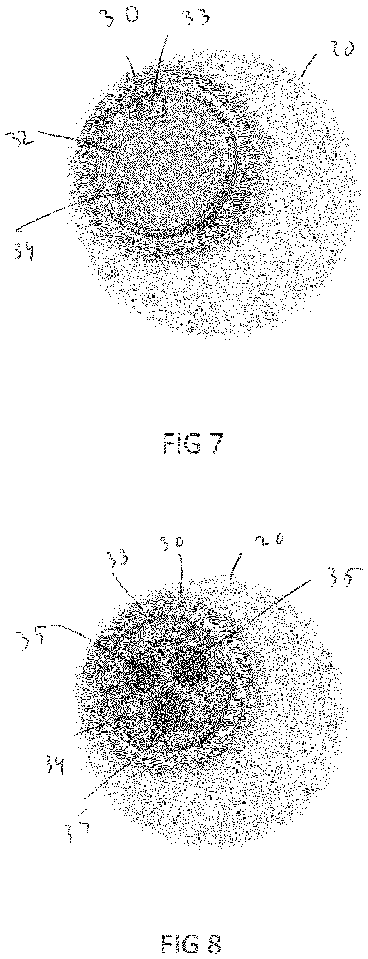

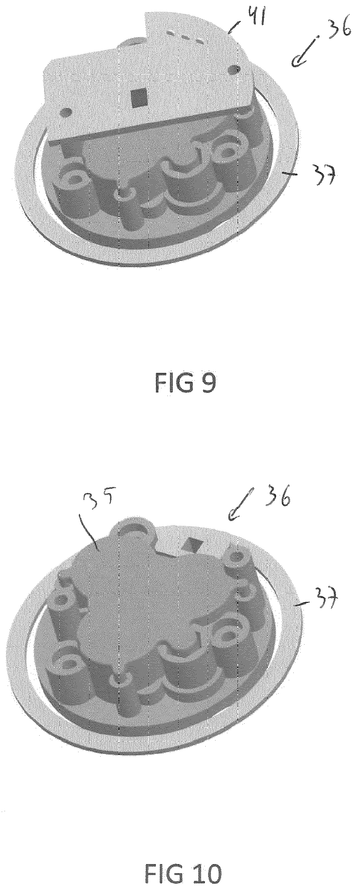

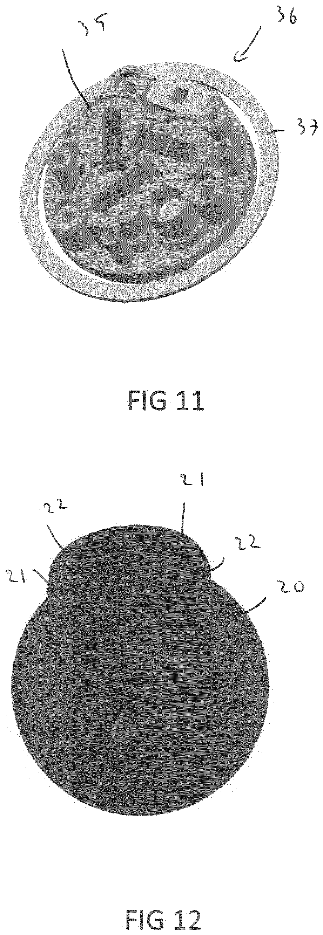

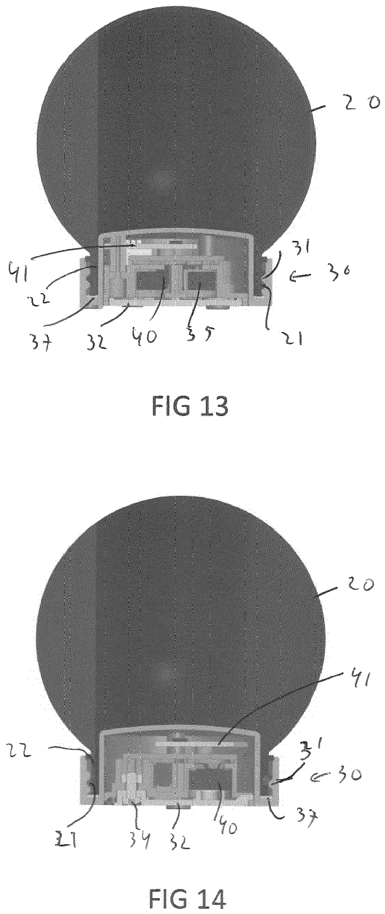

Figures 3-17 provide various aspects of the play device which form a further or additional part of the invention.

A play device comprising at least one gel object produced by casting a casting composition comprising two gel-forming compositions in a casting mould. The device further comprises:
A transparent, in particular colourless transparent, container 20. The container is provided for holding a translucent liquid. In many cases, the liquid will be water, usually pure tap water. The play device further comprise a gel object. That gel object can be the gel object described earlier, of one simple gel object in one part formed in a mould, for instance. The container 20 comprising a filling opening with an attachment provision 21. In particular on a collar 22;

A closing part 30 is provided for closing off the filling opening. The closing part 30 comprising a complementary attachment provision 31 for liquid-tight attaching to said attachment provision 21'of said transparent container 20. Here, a complementary thread is provided.

A density of said translucent liquid and said gel object such that said gel object is suspended in said translucent liquid, in particular in neutral buoyancy. Thus, the gel object seems to swim in the liquid.

The play device further comprises light-reflecting particles to be introduced into said transparent container for providing a cloud of reflecting particles in water when filling said container and surrounding said gel object when said play device is shaken. In a particular embodiment, the reflecting particles are flakes. In an embodiment, the reflecting particles having a density that is higher than said density of said translucent liquid. The particles can be mirror reflecting, and/or have a colour. It can look like snow in the play device.

The play device further comprises a lighting provision 40 in the closing part 30 for illumination of an interior of said transparent container. In an embodiment the lighting provision comprise LED elements on a lighting board 41. In an embodiment they have mutually differing colours.

The transparent container 20 in the depicted embodiment comprises a spherical shaped part or dome shaped part.

The closing part 30 comprises a surface for resting said play device on for instance a table surface, said surface mirroring said attachment provision.

The lighting provision 40 in an embodiment has at least three lighting elements here on board 41, each having a different colour. In particular having a different primary colour. The lighting device 40 comprises a controller 41 for changing colour or activating a different lighting element after a period of time. In particular the gel object has at least parts comprising coloring material changing colour depending on temperature, light colour, light intensity. For instance, dots can switch between being visible and invisible through the gel colour and light color interaction.

The color transmitted by said lighting provision 40 is selected with colour of part of gel object for providing a colour effect, for instance letting it become invisible with respect to said transparent liquid.

The filling opening is here round, circular to make attaching the container 20 and closing part 30 together easy.

The closing part 30 has battery compartments 35 for here holding three batteries 43 for powering the lighting provision 40. It may even slightly change the temperature for making the gel object of objects go up and down.

The play device here comprises a sealing ring 37 between said translucent container 20 and said closing part 30 for liquid-tight closing said playing device.

How to play:
1. Filled the mould will paint provided in kit.
2. Dip the filled mould into "Magic" water and stay inside the water for at least 3mins to make sure the paint and water have enough time to transfer paint from gel to 3D object.
3. Filled the Globe/transparent container 20 with tap water and add some salt.
4. Put the 3Dgel object and glitter into the Globe 20 and close the lock 30
5. Turn on the light by the switch 33 at the bottom of the Lock 30.
6. Kids enjoy fun with lights up Globe.

The Lock/closing part 30 is created with internal lighting system 40 which the system is totally separated with water, so the water will not touch the system to prevent short circuit

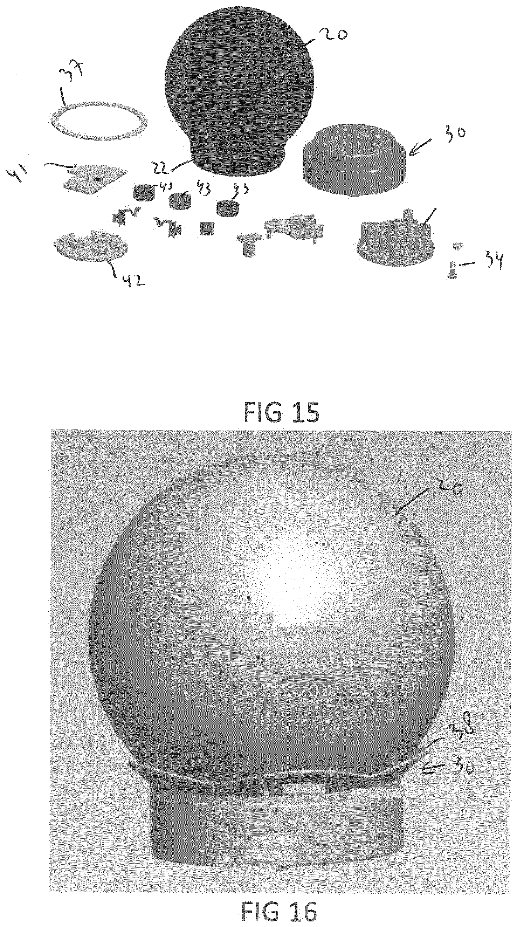

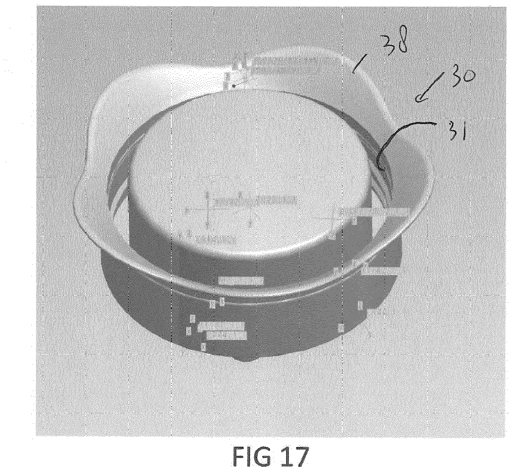

The embodiment of figures 16 and 17 present an additional design feature on the closing part 30 that provides an aesthetically attractive design.

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

### Reference numbers

1 casting mould
2 first casting mould sub volume
3 second casting mould sub volume
4 casting mould outer wall
5 first casting mould sub volume floor
6 separating wall
7 second casting mould sub volume floor
8 indented volume
10 gel object
11 main body
12 sub body
13 further sub body
20 transparent container, transparent dome
21 attachment provision, thread
22 collar
30 closing part
31 closing part attachment provision
32 closing part lid
33 lighting switch
34 closing part lid locking
35 battery compartment
36 closing part interior
37 sealing ring
40 lighting provision
41 lighting board lighting provision
42 Lid for the batteries
43 batteries
H casting mould outer wall height
S separating wall height
D indent depth

## Claims

1. A play device comprising at least one gel object produced by casting a casting composition comprising two gel-forming compositions in a casting mould, said device further comprising:
- a transparent, in particular colourless transparent, container for holding a translucent liquid, in particular water, and said gel object, said container comprising a filling opening with an attachment provision;
- a closing part for closing off said filling opening, said closing part comprising a complementary attachment provision for liquid-tight attaching to said attachment provision of said transparent container;
- a density of said translucent liquid and said gel object such that said gel object is suspended in said translucent liquid, in particular in neutral buoyancy.

2. The play device of claim 1, further comprising:
- light-reflecting particles to be introduced into said transparent container for providing a cloud of reflecting particles in water when filling said container and surrounding said gel object when said play device is shaken, in particular said reflecting particles are flakes, more in particular having a density that is higher than said density of said translucent liquid.

3. The play device of claim 1 or 2, further comprising wherein a lighting provision in said closing part for illumination of an interior of said transparent container, in particular said lighting provision are LED elements, more in particular having a mutually differing colours.

4. The play device of any one of the preceding claims, wherein said transparent container comprises a spherical shaped part or dome shaped part.

5. The play device of any one of the preceding claims, wherein said closing part comprises a surface for resting said play device on for instance a table surface, said surface mirroring said attachment provision.

6. The play device of claim 3, wherein said lighting provision has at least three lighting elements each having a different colour, in particular a different primary colour, and said lighting device comprises a controller for changing colour or activating a different lighting element after a period of time, and wherein in particular said gel object has at least parts comprising coloring material changing colour depending on temperature, light colour, light intensity.

7. The play device of claim 6, wherein color transmitted by said lighting provision is selected with colour of part of gel object for providing a colour effect, for instance letting it become invisible with respect to said transparent liquid.

8. The play device of any one of the preceding claims, wherein said filling opening is round, circular.

9. The play device of any one of the preceding claims, wherein said attachment provision allow sliding attachment, together provide a bayonet fitting, or comprise a complementary thread.

10. The play device of any one of the preceding claims, comprising a sealing ring between said translucent container and said closing part for liquid-tight closing said playing device.

11. A method for producing a paly device of claim 1, comprising:
- making said casting composition from at least two readily provided components;
- casting said at least one gel object using said casting mould;
- providing said container;
- filling said container with water and said gel object;
- closing said container with said closing part.

12. A method for casting a gel object, comprising providing:
- at least two gel-forming compositions, and
- a casting mould, said casting mould comprising a casting mould outer wall having a casting mould outer wall height and enclosing a casting mould volume, said casting mould volume divided into a first casting mould sub volume that is separated from at least one second casting mould sub volume through a separating wall having a separating wall height that is lower than said casting mould outer wall height,
said method further comprising:
- filling said at least one second casting mould sub volume with a first of said at least two gel-forming compositions;
- filling said first casting mould sub volume with a second of said at least two gel-forming compositions, and
- allowing said gelling compositions to form into a gel providing a gel object comprising a main body of said second of said at least two gel-forming compositions and at least one connected sub body of said first of said at least two gel-forming compositions.

13. The method of claim 12, wherein said at least two gel-forming compositions have different colours, in particular including colourless one colourless gel-forming composition.

14. The method of claim 12 or 13, wherein providing said at least two gel-forming compositions comprising providing:
- at least two first aqueous compositions comprising a water-solvable salt of an alginic acid and at least one of a respective first and second colouring agent or colorant;
- a second aqueous composition comprising at least 0.5-10 % by wt. calcium chloride, and
- contacting said at least two first aqueous compositions and said second aqueous composition.

15. The method of claim 13, further comprising:
- filling said at least one second casting mould sub volume with a first of said first aqueous solution;
- filling said first casting mould sub volume with a second of said first aqueous solution, and
- contacting said first aqueous solutions in said casting mould with said second aqueous solution.

16. A casting mould comprising a casting mould outer wall having a casting mould outer wall height and enclosing a casting mould volume, said casting mould volume divided into a first casting mould sub volume that is separated from at least one second casting mould sub volume through a separating wall having a separating wall height that is lower than said casting mould outer wall height.

17. The casting mould of claim 16, comprising a series of second casting mould sub volumes that are each separated from said first casting mould sub volume via a said separating wall.

18. The casting mould of claim 5 or 6, wherein said casting mould sub volumes each comprise a casting mould sub volume floor, wherein in particular said a casting mould sub volume floors is raised a maximum of 20 % of the outer wall height with respect to a neighbouring sub volume floor.

19. The casting mould of claim 16, 17 or 18, wherein at least one sub volume comprises an indent or hole, in particular having a depth of between 1-0.25 times the separating wall height.

20. The casting mould of claim 18 or 19, wherein the casting mould has a ratio of casting mould diameter to casting mould outer wall height of between 1:1 to 20:1, and a ratio of casting mould outer wall height to separating wall height of between 3:1 to 3:2.

21. The casting mould of claim 20, wherein the casting mould diameter is between 3 and 15 cm, in particular between 5 and 9 cm.

22. A kit-of-parts comprising:
- at least one casting mould according to claims 16-21;
- at least two first aqueous compositions comprising a water-soluble alginate, in particular sodium alginate, in an amount of between 1 and 4 % by wt. and at least one of said at least two first aqueous compositions comprising a colouring agent, said at least two first aqueous compositions provided in a respective first and second container;
- a second aqueous composition comprising a gelling compound, in particular calcium chloride, said second aqueous composition comprising an amount of between 5 and 10 % by wt. calcium chloride and is provided in a further container.

23. The kit-of-parts of claim 22, wherein said at least two first aqueous compositions each comprises at least one colouring agent providing said two first aqueous compositions with a visually different colour.

24. The kit-of-parts of claim 22 or 23, wherein said at least two first aqueous compositions are partially gelled, in particular said at least two first aqueous compositions are each provided in a tube and gelled such that they need to be pressed out of their tube by mild pressure, for instance by hand.
